# EUROPÄISCHE PATENTSCHRIFT

(11) **EP 0 701 491 B1**
(45) Veröffentlichungstag und Bekanntmachung des Hinweises auf die Patenterteilung: **10.09.1997**
(21) Anmeldenummer: 94916878.5
(22) Anmeldetag: 02.06.1994
(51) Int. Cl.: B09B 3/00

(54) **VORRICHTUNG UND VERFAHREN ZUR REINIGUNG VON VERUNREINIGTEM BODENMATERIAL**
DEVICE AND PROCESS FOR CLEANSING POLLUTED GROUND
PROCEDE ET DISPOSITIF POUR LE NETTOYAGE DE TERRES POLLUEES

(30) Priorität: 04.06.1993 DE 4318661
(43) Veröffentlichungstag der Anmeldung: 20.03.1996
(73) Patentinhaber: FRESENIUS UMWELTTECHNIK GMBH, 45699 Herten (DE); RUHRKOHLE UMWELTTECHNIK GMBH, 46236 Bottrop (DE)
(72) Erfinder: KANITZ, Jürgen, D-44805 Bochum (DE); THORWART, Rainer, D-44149 Drotmund (DE)
(74) Vertreter: Weber, Dieter, Dr.
(86) Internationale Anmeldenummer: DE9400627
(87) Internationale Veröffentlichungsnummer: WO9429039

(56) Entgegenhaltungen:
- EP-A- 0 339 289
- WO-A-89/09638
- WO-A-93/04319
- WO-A-93/06946
- DE-A- 3 809 115

## Beschreibung

Die vorliegende Erfindung betrifft eine Vorrichtung und ein Verfahren zur Reinigung von verunreinigtem Bodenmaterial, wobei in erster Linie flüchtige Verunreinigungen aus dem Bodenmaterial entfernt werden sollen. Unter flüchtigen Verunreinigungen werden dabei allerdings auch solche Verunreinigungen verstanden, die einen Siedepunkt jenseits von 200°C haben, wie z.B. hochmolekulare Kohlenwasserstoffverbindungen und andere organische Verbindungen. Auch verschiedene Metalle, Metallverbindungen und andere anorganische Substanzen zählen zu derartigen flüchtigen Stoffen, die oftmals sehr giftig sind und das Grundwasser und generell die Umwelt bedrohen. Derartige verunreinigte Böden findet man häufig an bestehenden oder aufgegebenen Industriestandorten, in welchen mit den verschiedensten Lösungsmitteln, Ölen und anderen der vorstehend erwähnten Verunreinigungen in der Vergangenheit allzu sorglos umgegangen wurde. Auch die Böden im Bereich von ehemaligen oder noch bestehenden legalen oder illegalen Deponien weisen häufig die vielfältigsten Verunreinigungen mit mehr oder weniger flüchtigen Stoffen auf. Um derartige Bereiche zu sanieren, muß der Boden derartiger Gelände je nach der Eindringtiefe der Verunreinigungen oberflächlich oder auch bis zu mehreren Metern Tiefe abgetragen und entweder anderweitig deponiert oder aber, was insbesondere bei sehr großen Mengen vorzuziehen ist, gereinigt werden.

Eine bekannte Vorrichtung zur Bodenreinigung weist im allgemeinen eine Vorzerkleinerungseinrichtung und eine Wärmebehandlungsstation auf. Daneben sind allerdings auch Bodenreinigungsvorrichtungen und Verfahren bekannt, bei welchen der Boden nicht oder nicht nennenswert mit Wärme behandelt, sondern mit Mikrolebewesen, wie z.B. Bakterien etc. "geimpft" oder durchmischt wird, die allerdings nur ein begrenztes Spektrum von Verunreinigungen abbauen können, was darüberhinaus unter Umständen auch sehr lange Zeit in Anspruch nehmen kann. Entsprechend dieser bekannten Vorrichtung ist bei dem bekannten Verfahren in einem ersten Schritt eine Vorzerkleinerung des Bodenmaterials vorgesehen, an welchen sich ein Wärmebehandlungsschrift anschließt. Bei der Wärmebehandlung kann grob unterschieden werden zwischen der sogenannten Pyrolyse, d.h. einer Erhitzung unter Luftabschluß, wobei aufgrund der Erhitzung die in dem Boden enthaltenen Verunreinigungen teilweise zerfallen sollen und als Abgase abgezogen werden und die Abgase anschließend weiterbehandelt werden können, und einer thermischen Behandlung unter Flammeneinwirkung, wobei das Bodenmaterial einer Brennerflamme ausgesetzt wird.

Beide Verfahren haben jedoch den Nachteil, daß sie, teilweise bedingt durch die relativ hohen Temperaturen oberhalb von 500°C, bei welchen diese Verfahren ablaufen, zu chemischen Umwandlungsprozessen führen, wobei teilweise neue und noch gefährlichere Verunreinigungen, wie z.B. Dioxine, entstehen können. Verfahren, bei welchen durch Erzeugung noch höherer Temperaturen oberhalb von 1000°C die Dioxine ihrerseits zerstört werden sollen, sind relativ aufwendig und kompliziert in der Verfahrenssteuerung, weil das der Erhitzung und Verbrennung folgende Abkühlen sehr schnell und unter kontrollierten Bedingungen erfolgen muß, damit sich nicht erneut Dioxine oder andere kritische Verbindungen bilden. Außerdem sind diese bekannten Vorrichtungen und Verfahren relativ energieaufwendig, was die Bodenreinigung dementsprechend teuer macht.

Eine Vorrichtung bzw. ein Verfahren nach den Oberbegriffen der Ansprüche 1 bzw. 11 ist aus dem Dokument WO-A-89 09 638 bekannt.

Demgegenüber liegt der vorliegenden Erfindung die Aufgabe zugrunde, eine Vorrichtung und ein Verfahren der oben genannten Art zu schaffen, welche eine noch effizientere Reinigung des Bodens von flüchtigen Stoffen mit einem noch geringeren Energieeinsatz und zu noch geringeren Kosten ermöglichen.

Hinsichtlich der Vorrichtung wird diese Aufgabe durch die Merkmale des Anspruchs 1 gelöst. Die Wärmebehandlungsstation ist dabei ein Evaporator, an welchem Heizeinrichtungen, Umwälz- und Transporteinrichtungen, sowie in einem vorgegebenen Abstand vom Materialeinlauf eine Dampfzufuhreinrichtung für die Zufuhr von über die Wasserkondensationstemperatur erhitztem Wasserdampf zu dem in diesem Bereich ebenfalls über die Kondensationstemperatur von Wasser erhitzten Bodenmaterial vorgesehen sind. Unter einem Evaporator wird dabei im wesentlichen ein Behälter verstanden, in welchem aus dem Bodenmaterial durch Erhitzen die Feuchtigkeit ausgetrieben wird, d.h. ein Gerät, in welchem das Bodenmaterial auf über 100°C, z. B. auf bis zu 300°C, erhitzt wird.

Die Heizeinrichtungen weisen dabei zwei oder mehr hohle, mit Umwälz- und Transportschaufeln versehene, drehbare Wellen auf, die sich in Längsrichtung eines länglichen Evaporatorbehälters erstrecken.

Die Dampfzufuhreinrichtungen sind im letzten Drittel des Evaporators vorgesehen.

Hinsichtlich des eingangs genannten Verfahrens wird die der Erfindung zugrundeliegende Aufgabe durch die Merkmale des Anspruchs 11 gelöst. Das Bodenmaterial wird ohne Kontakt mit einer offenen Flamme über bewegte Wärmetauscher auf eine Temperatur oberhalb der Siedetemperatur von Wasser und auf jeden Fall unterhalb von 400°C erhitzt und anschließend wird das erhitzte, feinkörnige Bodenmaterial heißem Wasserdampf ausgesetzt, welcher die flüchtigen Bestandteile von dem Bodenkorn gemäß Dampfdruck und Wasserdampfflüchtigkeit löst, oder durch Ausbildung einer ein- oder mehrmolekularen Schicht verdrängt.

Dabei erfolgt die Erhitzung bzw. Behandlung so, daß keinerlei Bodenagglomerate mehr vorliegen, d.h. das einzelne Bodenkorn offen liegt.

In der Vorzerkleinerungsanlage wird das Bodenmaterial bis auf relativ kleine Bröckchen oder Klumpen mit einer Größe von typischerweise weniger als 10 mm Durchmesser zerkleinert, größere Stein- oder Felsbrocken werden aussortiert. Werden nun in den Evaporator diese kleinen Bodenklumpen ohne Einwirkung einer äußeren Flamme, sondern nur durch Kontakt mit Heizeinrichtungen und/oder Konvektion und Wärmeleitung erhitzt, so wird das in den Klumpen enthaltene Wasser ausgetrieben, welches letztlich auch das Bindemittel für die im allgemeinen aus einem relativ feinkörnigen Material bestehenden Bodenklumpen bildet. Hierdurch zerfallen die schon vorzerkleinerten Klumpen des Bodenmaterials in dem Evaporator, auch aufgrund der Transport- und Umwälzbewegungen, noch weiter zu einem sehr feinkörnigen Material, welches durch die Heizeinrichtungen in den Evaporator auf eine gewünschte Temperatur in dem angegebenen Temperaturbereich, vorzugsweise auf eine Temperatur zwischen 110 und 350°C gebracht ist, wobei die Erhitzungstemperatur einstellbar und regelbar ist. Dann wird diesem feinkörnigen, erhitzten Material erhitzter bzw. überhitzter Wasserdampf zugeführt, wobei dieser Wasserdampf wegen der Feinkörnigkeit des Bodenmaterials eine sehr große Angriffsfläche hat und von dem freiliegenden Bodenkorn jegliche flüchtigen Bestandteile, insbesondere soweit deren Verdampfungstemperatur unterhalb der erreichten Temperatur liegt, löst. Bei einer Temperatur von bis zu 350°C werden dabei auch hochmolekulare Kohlenwasserstoffverbindungen ausgetrieben bzw. von dem Bodenkorn abgestreift bzw. "gestrippt". Diese sind in dem Wasserdampf gelöst und werden durch diesen mitgerissen. Dies gilt in gleicher Weise auch für Metalle, insbesondere für Quecksilber und andere niedrig schmelzende Metalle, wie z.B. Cadmium oder bestimmte Arten von Metallegierungen. Damit ist das Bodenmaterial bereits weitestgehend von den in ihm enthaltenen Giftstoffen befreit und kann aus dem Evaporator ausgetragen und gekühlt werden und wird durch Feuchtigkeitszugabe wieder auf eine normale, gewünschte Bodenkonsistenz gebracht.

Besondere Ausgestaltungen der Vorrichtung und des Verfahrens zum Reinigen von Bodenmaterial, für spezielle Anwendungszwecke und insbesondere auch bevorzugte Ausführungsformen und Ausgestaltungen ergeben sich aus den Merkmalen der Unteransprüche, die im folgenden kurz erläutert werden. Dabei wird ausdrücklich darauf hingewiesen, daß die Merkmale aus den Unteransprüche auch einzeln untereinander bzw. mit den Merkmalen der Hauptansprüche kombinierbar sind, soweit sich aus dem Zusammenhang nicht eindeutig ergibt, daß bestimmte Merkmale nur gruppenweise gemeinsam miteinander verwirklicht werden können.

So ist es beispielsweise zweckmäßig, wenn die Heizeinrichtung der erfindungsgemäßen Vorrichtung von einem fließfähigen Wärmeträger durchströmte, teilweise bewegte Hohlelemente aufweist, welche mit ihren dem Wärmeträger abgewandten Außenflächen mit dem Bodenmaterial in Kontakt treten. Auf diese Weise kann der fließfähige Wärmeträger an anderer Stelle erhitzt und auf eine gleichmäßige Temperatur gebracht werden, so daß auch die Heizeinrichtungen eine gleichbleibende Temperatur auf einem gewünschten Niveau haben. Die in dem Wärmeträger gespeicherte Wärme kann dann über die Wände der hohlen Elemente nach dem Wärmetauscherprinzip auf das Bodenmaterial übertragen werden, welches auf diese Weise ebenfalls sehr gleichmäßig auf ein bestimmtes Temperaturniveau gebracht werden kann.

Auch die Umwälz- und Transportschaufeln können teilweise hohl sein und von dem Wärmeträger durchströmt werden. Insbesondere können Umwälz- und Transportschaufeln auch als U-förmige Bügel ausgebildet sein, welche in einer vorgegebenen Richtung von dem Wärmeträgermaterial durchströmt werden.

Der fließfähige Wärmeträger wird dabei in einem Kreislauf geführt und nach seiner Abkühlung in dem Evaporator, wieder zu einem Heizkessel zurückgeführt und erneut auf eine gewünschte Temperatur erhitzt. Als konkreter Wärmeträger hat sich Öl als zweckmäßig erwiesen, wobei spezielle, synthetische Öle mit sehr hohem Siedepunkt zu bevorzugen sind, um das Bodenmaterial auf entsprechend hohe Temperaturen aufheizen zu können.

Neben einer Aufheizeinrichtung bzw. einem Kessel für die Erwärmung des Öls ist außerhalb des Evaporators auch ein Dampferzeuger vorgesehen, der den Dampf erzeugt, welcher anschließend vorzugsweise im hinteren Bereich der Durchlaufstrecke des Bodenmaterials durch den Evaporator, und zwar möglichst von dessen Unterseite her, in das Bodenmaterial ein- bzw. durch dieses hindurchgeblasen wird.

In der Wasserzufuhr für den Dampferzeuger ist zweckmäßigerweise eine Entmineralisierungseinrichtung vorgesehen, damit sich nicht gelöste Stoffe, insbesondere Kalk, im Innern des Dampferzeugers und in den Dampfzufuhrleitungen ablagern.

Vorzugsweise an der Oberseite des Evaporators ist mindestens eine Abgasleitung vorgesehen, welche in erster Linie den Dampf aufnimmt, der als sogenannter "Stripp-Dampf" durch das Bodenmaterial hindurchgeströmt ist und die Verunreinigungen vom Bodenkorn gelöst hat. Soweit sich dies mit einschlägigen Sicherheitsbestimmungen vereinbaren läßt, kann gegebenenfalls auch noch zusätzlich hinzugefügter Trägerdampf in den Evaporator ein- und durch die Abgasleitung abgeführt werden, um in effektiverer Weise den Stripp-Dampf, in welchem die Verunreinigungen gelöst sind, mitzunehmen. Dieser zusätzliche Trägerdampf kann im oberen Bereich des Evaporators eingeblasen werden und muß nicht das Bodenmaterial durchströmen. Der Evaporator ist im allgemeinen nicht vakuumdicht, so daß, wenn der Evaporator erfindungsgemäß mit leichtem Unterdruck zwischen 2 und 50 mbar unter Normaldruck betrieben wird, durch Lecks, insbesondere durch die Eintrags- und Austragsvorrichtungen, sogenannte Leckluft nachströmt, die ebenfalls zusammen mit dem Dampf durch die Abgasleitung entweicht und zu einer Abgasreinigungsvorrichtung geführt wird. Selbstverständlich ist auch eine Auslegeung des Evaporators auf Vakuumbetrieb ohne weiteres möglich.

Eingang und Ausgang des Evaporators sind vorzugsweise mit schleusenartigen Ein- und Austragsvorrichtungen, wie z.B. Zellradschleusen oder dergleichen versehen, wodurch die Leckrate relativ gering gehalten werden kann.

Dem Ausgang für das Bodenmaterial bzw. der Austragseinrichtung für das Bodenmaterial aus dem Evaporator sind eine Kühlschnecke sowie ein Trockenkühler nachgeschaltet, in welchem das trockene Bodenmaterial gekühlt und auf ca. 10% bis 15% Feuchte mit Wasser angefeuchtet wird. Der Boden wird aus dem Trockenkühler ausgetragen und liegt dann für eine Wiederverwendung, z.B. auch für die Ausbringung auf Feld- oder Waldböden, vor. Die Feuchtigkeitszugabe in den Trockenkühler wird dabei so gestaltet, daß das zum Schluß abgegebene Bodenmaterial die Feuchtigkeit von normalem Erdboden hat, insbesondere also weder staubig noch schlammigflüssig ist. Der Abgasbehandlung wird zweckmäßigerweise noch ein Staubfilter bzw. -abscheider vorgeschaltet, wie z. B. ein Prallabscheider, ein Zyklon oder ein Elektrofilter, am besten eine Kombination aus Prallabscheider und einem mit Wechselstrom betriebenen Elektrofilter.

Die Abgasbehandlungs- bzw. Abgastrenneinrichtung weist mindestens einen Kondensator auf, der vorzugsweise knapp unterhalb des Taupunktes von Wasser betrieben wird. Man erreicht hierdurch, daß der vom Evaporator kommende, Verunreinigungen enthaltende Dampf sowie ausgetriebene Bodenverunreinigungen zu einem gewissen Teil auskondensieren. Das anfallende Kondensat sowie mitgerissener, niedergeschlagener Staub werden in einen Schwerkraftabscheider geleitet und in feste und flüssige Phasen getrennt. Der noch nicht auskondensierte Dampf wird zu einem zweiten Kondensator geführt, der bei deutlich niedriger Temperatur von ca. 40°C betrieben wird, dessen Kondensat ebenfalls dem Schwerkraftabscheider zugeführt wird. In dem Abscheider werden organische, wäßrige und feste Phase voneinander getrennt und ausgeschleust. Die organische Phase wird entsorgt oder kann gegebenenfalls wieder aufbereitet und weiter verwendet werden.

Die nach dem zweiten Kondensator verbleibende gasförmige Phase wird gekühlt, optional tiefgekühlt (z. B. unter den Schmelzpunkt von Quecksilber), und durch Kühler und Aktivkohlefilter geschickt, bis schließlich im wesentlichen Leckluft verbleibt, die nach außen abgeführt wird. Es versteht sich, daß die Aktivkohlefilter von Zeit zu Zeit regeneriert werden müssen und daß dann die in den Aktivkohlefiltern zurückgehaltenen Stoffe ihrerseits entsorgt werden müssen.

Das erfindungsgemäße Verfahren zeichnet sich vor allem dadurch aus, daß es keinen direkten Kontakt zwischen einer Flamme und dem Bodenmaterial gibt, sondern daß dieses indirekt mit Hilfe eines Wärmeträgers bzw. über Wärmetauscher aufgeheizt wird. Hierdurch hat man eine sehr genaue Kontrolle über die Temperatur, welche das Bodenmaterial schließlich erreicht und bei welcher es dem sogenannten Stripp-Dampf ausgesetzt wird. Das Erhitzen und Bedampfen geschieht in demselben Behälter, jedoch in verschiedenen Abschnitten, während Transport- und Umwälzeinrichtungen das Bodenmaterial langsam von einem Eingang zu einem Ausgang des Behälters bewegen, wobei es zunächst aufgewärmt und dann, wie bereits erwähnt, dem Dampf ausgesetzt wird. Nachdem das Bodenmaterial aufgrund der Wärmeeinwirkung und wegen des gleichzeitigen Umwälzens sehr feinkörnig geworden ist, entzieht ihm der Dampf praktisch sämtliche relevante Verunreinigungen, wie z.B. die üblichen organischen Verbindungen in Form von Lösungsmitteln, chemischen Grundstoffen, Ölen, Teer, Benzin etc., aber auch viele anorganische Stoffe, wie z.B. leicht flüchtige Metalle und Metallegierungen. Wenn das Bodenmaterial den Ausgang des Evaporators erreicht hat, ist es gereinigt und braucht anschließend nur noch gekühlt und auf den normalen Feuchtigkeitsgehalt von Bodenmaterial gebracht zu werden. Die beim Abkühlen und Befeuchten frei werdende Abwärme kann eventuell für die Weiterbehandlung des aus dem Evaporator frei werdenden Abgases genutzt werden.

Besonders bevorzugt ist eine Ausgestaltung des Verfahrens, bei welcher hinter dem oben erwähnten Staub- bzw. Trockenfilter und vor dem Kondensator noch eine wahlweise zuschaltbare Überhitzung erfolgt. Hierdurch können bei Bedarf noch verschiedene Fraktionen und andere, möglicherweise schwer handhabbare oder giftige Verbindungen gecrackt werden, deren Bestandteile sich nach dem Überhitzen auf Temperaturen bis in den Bereich von 550 °C oder 600 °C im Kondensator oder folgenden Stationen leichter abscheiden lassen.

Mit dem erfindungsgemäßen Verfahren lassen sich neben "normalen" Böden auch extrem feinkörnige, schluffige und tonige Bodenmaterialien reinigen. Ein weiterer besonderer Vorteil der vorliegenden Erfindung liegt darin, daß die Behandlungstemperatur in dem Evaporator den konkreten Verunreinigungen angepaßt werden kann. So kann die Behandlungstemperatur teilweise deutlich unterhalb der möglichen Maximaltemperatur in dem Evaporator gehalten werden, wenn z.B. nur niedermolekulare Kohlenwasserstoffe und andere Lösungsmittel als wesentliche Verunreinigungen aus dem Boden auszutreiben sind. Das Verfahren und die Vorrichtung können also den tatsächlichen Verunreinigungen in optimaler Weise angepaßt werden. Dies trägt zu einer vollständigen Reinigung mit möglichst geringem Energieaufwand bei.

Bezüglich des aus dem ersten Evaporator austretenden Abgases ist die Behandlung in einem ersten Sprühkondensator vorgesehen, wobei erfindungsgemäß diese Behandlung in dem Sprühkondensator knapp unterhalb des Taupunktes von Wasser betrieben wird, also oberhalb von 90°C und vorzugsweise im Bereich zwischen 95 und 96°C. Die Temperatursteuerung in dem Sprühkondensator erfolgt dabei vorzugsweise über einen elektronisch geregelten Kühlwasserdurchsatz im Kühler. Das Betreiben des Sprühkondensators bei einer derart hohen Temperatur trägt unter anderem dazu bei, daß das anfallende Kondensat zumindest die in diesem Temperaturbereich nicht gasförmigen Verunreinigungen in höherer Konzentration enthält, da das in Form von Wasserdampf ankommende Abgas bei dieser Temperatur nur teilweise kondensiert, während ein Teil des Abgases, der nunmehr vorwiegend die besonders leicht flüchtigen Stoffe enthält, zu einem zweiten Kondensator geführt wird, der nunmehr bei einer deutlich niedrigeren Kondensationstemperatur unter 60°C, und vorzugsweise in der Größenordnung von 25 bis 30°C betrieben wird.

Die auch danach noch gasförmigen Stoffe werden einer weiteren Abkühlung und Filterung mit Hilfe von Aktivkohlefiltern unterzogen. Die Kondensate werden einem Schwerkraftabscheider zugeführt, in dem sie in feste, organische und wäßrige Phase getrennt werden. Die leichten Produkte aus dem Schwerkraftabscheider, wie z.B. flüssige Kohlenwasserstoffverbindungen (Benzin, Öl, etc.), können gegebenenfalls einer Nutzung, gegebenenfalls sogar als Energieträger der Anlage oder einer weiteren Trennung und Raffinierung unterzogen werden. Die wäßrige Phase aus dem Schwerkraftabscheider wird nacheinander durch ein Feinfilter, eine Strippkolonne, die mit Luft betrieben wird, und einen abschließenden Aktivkohlefilter geleitet, wenn es aus der Anlage ausgeschleust wird. Ein Teil des Wassers aus dem Abscheider wird vor oder nach der Strippanlage in den Kühlkreislauf des ersten Kondensators geleitet.

Zweckmäßigerweise ist für die gesamte Anlage eine Online-Steuerung vorgesehen, d.h. die Anlage wird anhand vorgebbarer oder auch fest programmierbarer Parameter automatisch gesteuert und überwacht, wobei selbstverständlich entsprechende Sensoren, z.B. für Temperatur, Druck, Strömungsmengen etc., an den geeigneten Stellen vorgesehen sind, wobei Abweichungen der Sensoren von den vorgegebenen bzw. vorprogrammierten Werten durch entsprechende Steuerung der Parameter der darauf wirkenden Anlageteile angepaßt werden.

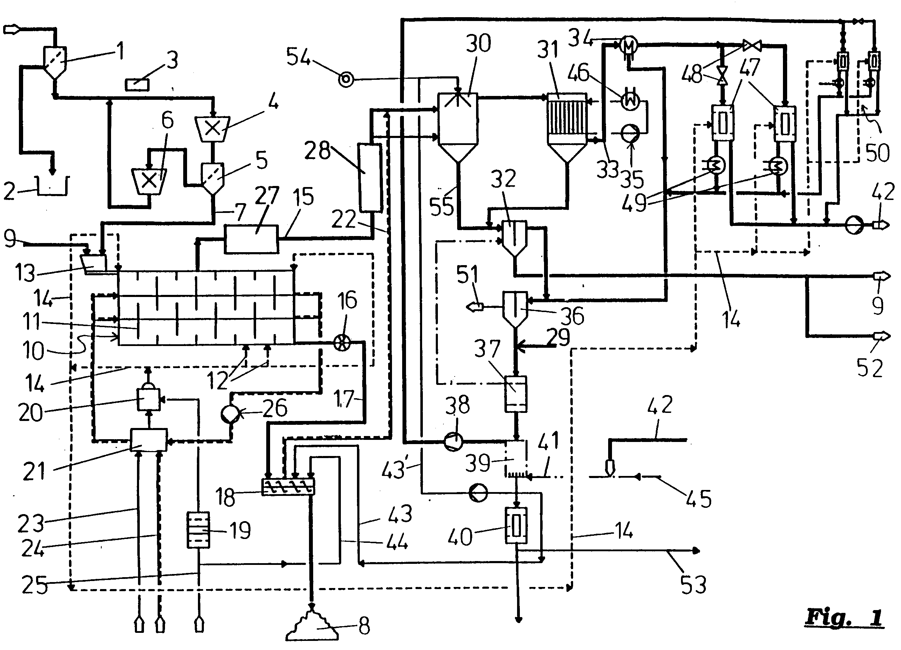

Weitere Vorteile, Merkmale und Anwendungsmöglichkeiten werden deutlich anhand der folgenden Beschreibung einer bevorzugten Ausführungsform der Anlage und des Verfahrensablaufes, wie sie schematisch anhand eines Diagramms in der einzigen Figur dargestellt sind.

Kern der Anlage zur Bodenreinigung ist ein Evaporator 10, der im linken Bildteil schematisch mit Umrissen und kombinierten Umwälz-/Heizeinrichtungen 11 dargestellt ist.

Die gesamte Anlage besteht im wesentlichen aus einem Vorbereitungsteil, dessen Elemente im wesentlichen mit den Bezugszahlen 1 bis 7 gekennzeichnet sind, einem Bodenbehandlungsteil, bestehend aus dem Evaporator 10 und den zugehörigen, mit den Bezugszahlen 10 bis 26 bezeichneten Komponenten, und dem Abgasbehandlungsteil, dessen Komponenten im wesentlichen mit den Bezugszahlen oberhalb von 30 bezeichnet sind, und der im wesentlichen die rechte Hälfte der Figur ausmacht.

Der verunreinigte Boden gelangt zunächst in eine Trenneinrichtung für Grobgut mit typischem Durchmesser von z. B. deutlich mehr als 50 mm, wie Steine oder Felsen, die in einem Behälter 2 gesammelt werden und gegebenenfalls oberflächlich mechanisch und mit Hilfe von Spülwasser gereinigt werden können, wobei die Reinigungsabfälle wieder dem verunreinigten Boden vor oder hinter der Trenneinrichtung 1 oder 5 beigegeben werden können. Mit 3 ist ein Magnet bezeichnet, der magnetische Werkstoffe aus dem verunreinigten Boden aussortiert. Ein Schredder ist mit der Bezugszahl 4 gekennzeichnet und zerkleinert die zunächst noch relativ groben Klumpen, aus welchen verunreinigter Boden üblicherweise besteht. Der zerkleinerte Boden gelangt dann durch eine weitere Trenneinrichtung 5 über die Bahn oder Leitung 7 zu einer Eintragsvorrichtung 13 für den Evaporator 10. Das Material, welches in der Abtrenneinrichtung 5 als zu grob aussortiert wurde, weil es möglicherweise zu hart ist, um in dem Schredder 4 zerkleinert zu werden, wird zunächst in einen Brecher 6 geleitet, der auch das harte, grobe Material zerkleinert und dieses erneut vor dem Magneten 3 in die Bahn bzw. Leitung zum Schredder 4 abgibt.

Die Eintragsvorrichtung 13 kann z.B. ein Vorratsbunker mit Zellradschleuse sein.

Das von der Einrichtung 13, z.B. über eine Zellradschleuse in den Evaporator gelangende Material wird durch Umwälzeinrichtungen 11 ständig in Bewegung gehalten und dabei langsam von der Eintragsvorrichtung 13 zu einer Zellradschleuse 16 am Ausgang des Evaporators 10 geführt. Der Evaporator 10 kann die Form eines sogenannten "Schaufeltrockners" haben, d.h. die Umwälzelemente 11 sind z.B. als drehbare Wellen ausgebildet, die entlang ihres Umfanges verteilt Schaufeln aufweisen, die zumindest den größten Teil des Volumens des den Evaporator nach außen abschließenden Gefäßes überstreichen, und damit das Material im Innern ständig auflockern, in Bewegung halten und allmählich in der Figur von links nach rechts transportieren. Es versteht sich, daß für diesen Transport die Schaufeln in einer Richtung schräg angestellt werden können, so daß beim Drehen der Schaufeln um die Wellen an der Vorderfläche der Schaufeln eine Vorschubkraft in Axialrichtung der Wellen entwickelt wird. Die Vorschubkraft wird jedoch auch schon durch ein Gefälle im behandelten Bodenmaterial erzeugt, welches durch den vorzugsweise kontinuierlichen Eintrag von Material am in der Figur linken Ende des Evaporators und der Austragung von Material am rechten Ende ensteht. Der den Evaporator abschließende Behälter kann eine zylindrische Trommel sein, deren Länge vorzugsweise deutlich größer ist als ihr Durchmesser, die Querschnittsform dieses Behälters kann jedoch auch oval sein oder aus zwei einander teilweise durchdringenden Zyinderteilen bestehen, wenn, wie schematisch dargestellt, zwei parallele Wellen mit Schaufelelementen vorgesehen sind, die sich in Längsrichtung durch den Evaporatorbehälter erstrecken.

Wie anhand der dick gestrichelten Linie verdeutlicht wird, die nach links von der Heizeinrichtung 21 ausgeht, wird ein Wärmeträger, vorzugsweise Öl, axial in die Umwälzelemente 11 bzw. deren Wellen eingeführt, die zu diesem Zweck als Hohlwellen ausgebildet sind, wobei auch die Umwälzschaufeln zumindest teilweise als Hohlelemente ausgebildet sein können. Auf diese Weise wird Wärmeenergie von dem die Heizeinrichtung 21 und die Umwälzeinrichtungen 11 durchlaufenden, dick gestrichelten Ölkreislauf auf das Bodenmaterial übertragen. Eine Umwälzpumpe 26 sorgt dabei dafür, daß abgekühltes Öl am anderen Ende der Welle zurück zu der Heizeinrichtung 21 geführt, dort aufgeheizt und vorn in die Hohlwellen der Umwälzelemente 11 wieder eingeführt wird.

Durch die Zuführ- und Austragsmengen, die Rotationsgeschwindigkeit der Umwälzelemente 11 und deren konkrete Ausgestaltung (Schrägstellung von Schaufeln oder die Schrägstellung des Evaporators (2° - 3°)) kann man die Verweilzeit des Materials in dem Evaporator 10 einstellen. Über die Verweilzeit und die Temperatur des aus der Heizeinrichtung 21 abgegebenen Öls kann man dann eine gewünschte Temperatur des Bodenmaterials einstellen, welche dieses z.B. nach Durchlauf der halben Strecke des Evaporators erreicht haben sollte.

Erst im letzten Drittel des Evaporators 10 münden Heißdampfleitungen 12, und zwar im unteren Bereich bzw. Boden des Evaporators, so daß der dort austretende Dampf zwangsweise durch den Boden hindurchtreten muß. Das zuvor umgewälzte und dabei erhitzte Bodenmaterial hat inzwischen die in ihm enthaltene Bodenfeuchtigkeit verloren und liegt damit im allgemeinen in pulvriger, mindestens aber in feinkörniger Form vor. Der sogenannte Stripp-Dampf (Abstreifdampf), der aus den Leitungen 12 austritt, hat damit an dem Bodenmaterial eine sehr große Angriffsfläche und kann die damit auf dem Bodenkorn anhaftenden und abdiffundierenden Verunreinigungen nahezu vollständig von dem Bodenkorn entfernen (bzw. abstreifen).

Der Heißdampf wird durch einen Dampfgenerator 20 erzeugt, welcher entweder vom selben Kessel wie die Heizeinrichtung 21 oder aber mit der Abwärme von der Heizeinrichtung 21 betrieben werden kann, wie durch einen Verbindungspfeil zwischen der Heizeinrichtung 21 und dem Dampferzeuger 20 angedeutet. Der im allgemeinen überhitzte Dampf wird vom Dampferzeuger in eine Dampfleitung 14 gegeben, die sich verzweigt, wobei ein Teil des Dampfes, wie bereits erwähnt, durch die Anschlüsse 12 in den Evaporator 10 gedrückt wird, während ein anderer Teil von der Oberseite her in den Evaporator geleitet wird (siehe die dünn gestrichelten Linien) und dabei im wesentlichen als Trägergas dient, welches auch den Stripp-Dampf, der die Verunreinigungen aus dem Boden aufgenommen hat, durch eine Abgasleitung 15 mitnimmt.

Eine weitere Verzweigung der Dampfleitung 14 führt zu Aktivkohlefiltern 47, 50 in dem Abgasbehandlungsteil und dient zur gelegentlichen Regeneration dieser Aktivkohlefilter.

Dem Dampferzeuger 20 wird von einer Wasserleitung 25 über eine Entmineralisierungsvorrichtung 19 Wasser zugeführt, wobei die Entmineralisierung den Zweck hat, Ablagerungen von Kalk und dergleichen im Dampferzeuger 20 zu vermeiden.

Die zur Heizeinrichtung 21 führende, dick gestrichelte Leitung 24 führt Verbrennungsluft, während ein entsprechender Brennstoff, wie z.B. Gas oder Öl, durch die Leitung 23 zugeführt wird. Der gereinigte Boden wird am Ende des Evaporators 10 über eine Zellradschleuse 16 ausgetragen und über die Bahn bzw. Leitung 17 einem Trockenkühler 18 zugeführt. Der Trockenkühler 18 erhält eine Wasserzugabe aus der Leitung 25 oder der Leitung 43 zum abschließenden Anfeuchten des Bodens, um den gereinigten Boden 8 dann schließlich in der gewünschten Konsistenz austragen, weiterverwenden und gegebenenfalls zwischenlagern zu können. Der dabei in dem Kühler 18 frei werdende Wasserdampf wird kondensiert und wieder eingebracht. Aus dem Filter 40 austretendes Wasser wird ausgeschleust oder kann teilweise als Speisewasser (abhängig von der Salzfracht) für den Dampferzeuger verwendet werden.

Der aus der Leitung 15 in den Sprühkondensator 30 eintretende Dampf kondensiert zumindest teilweise, wobei auch die Verunreinigungen, die eine mit Wasser vergleichbare oder schwerere Flüchtigkeit haben, sich in dem Kondensat anreichern. Der nicht kondensierende Wasserdampf, sowie auch ein gewisser Anteil Luft in dem System, wird weitergeleitet zu dem zweiten Kondensator 31. Ein gewisser Anteil an Leckluft ist in der Abgasleitung 15 schon deshalb vorhanden, weil sich die Ein- und Austragvorrichtungen 13 und 16 sowie die Wellendichtungen nicht oder nur mit erheblichem Aufwand hermetisch dicht ausführen lassen. Da der Evaporator außerdem bei einem leichten Unterdruck im Bereich von zum Beispiel 5 bis 10 mbar unter Normaldruck betrieben wird, wird ein entsprechender Anteil an Leckluft angesaugt und durch die Abgasleitung 15 in die Kondensatoren 30, 31 geführt.

Nach dem Austritt aus dem Evaporator und vor dem Kondensator ist jedoch zunächst ein Staubfilter 27 vorgesehen, und zwar in Form eines Prallabscheiders, der mit einem Wechselspannungs-Elektrofilter kombinert ist. Mit 28 ist eine Überhitzungseinrichtung bezeichnet, die nur bei Bedarf in Betrieb genommen und ansonsten umgangen oder ohne Überhitzung des hindurchtretenden Gases durchlaufen wird. Je nach der Art der zu beseitigenden Bodenverunreinigungen kann jedoch eine Überhitzung an dieser Stelle z. B. bis auf 550 oder 600°C sinnvoll sein, um bestimmte Bestandteile des Gases zu cracken und damit der weiteren Behandlung leichter zugänglich zu machen.

Die einzelnen Stufen und schemenhaft dargestellten Blöcke im rechten Teil des Diagramms sind im allgemeinen so zu verstehen, daß eine schwerere, flüssige oder feste Fraktion jeweils am unteren Ende der schematisch dargestellten Behälter abgezogen wird, während eine leichtere Fraktion weiter oben seitwärts aus den betreffenden Behältern austritt. Die schwere Fraktion aus dem Kondensator 30 gelangt demnach in einen Sedimentabscheider 32 und dieses Sediment wird anschließend in den Ausgang 9 geleitet, der wiederum in die Eintragsvorrichtung 13 mündet, dieses Sediment wird also erneut der Reinigung im Evaporator unterzogen. Im allgemeinen handelt es sich dabei um relativ kleine, staubförmige Partikel, die im Evaporator 10 durch den Stripp-Dampf mitgerissen wurden (wenn der Staubfilter 27 fehlt oder die möglicherweise den Staubfilter 27 passiert haben), von denen sich aber bei einem erneuten Durchgang ein Teil als Bodenmaterial 8 zurückgewinnen läßt.

Die leichtere Fraktion aus dem Sedimentabscheider 32 gelangt dann in einen Schwerkraftabscheider 36, in welchen auch die schwerere Fraktion des zweiten Kondensators 31 geleitet wird. Vom Schwerkraftabscheider 36 wird die schwerere Fraktion wiederum in den darunterliegenden Partikelfilter 37 gegeben und der dabei zurückgehaltene Feinstschlamm wird über die strichpunktierte Leitung vom Sandfilter 37 wieder in den Sedimentabscheider 32 geführt. Die wäßrigen Phasen werden dann erforderlichenfalls bei 29 durch Zugabe eines Neutralisationsmittels neutralisiert und durchlaufen anschließend den Partikelfilter 37 und gelangen in eine zweistufige Strippkolonne 39 mit einer Luftzufuhrleitung 41. Die Luft nimmt wiederum flüchtige Bestandteile aus der Flüssigkeit in der Strippkolonne 39 mit und wird über eine Pumpe 38 in eine Aktivkohlefiltergruppe 50 geführt. Der verbleibende Rest durchläuft die Strippkolonne bishin zu einem Aktivkohlefilter 40, von wo das nunmehr gereinigte Wasser in die Leitung 43 gegeben wird, das je nach Salzgehalt teilweise dem Speisewasser des Dampferzeugers beigemischt werden kann. Überschüssiges Wasser wird durch die Leitung 53 entfernt.

Die Luft in der Leitung 41 für die Strippkolonne 39 ist teilweise Frischluft aus der Leitung 45, teilweise jedoch auch Abluft 42, die aus den Aktivkohlefiltern 47 und 50 austritt.

Der zweite Kondensator 31 wird bei einer Kondensationstemperatur von ca. 40°C betrieben, wobei die verbleibenden gasförmigen Bestandteile über die Leitung 33 in einen Kühler 34 gelangen. Ein Kühlturm 46 ist in einen Kältekreislauf für den Kondensator 31 eingeschaltet, um den Kondensator 31 trotz der Zufuhr relativ heißer Abgase aus dem ersten Kondensator 30 bei der gewünschten, niedrigen Kondensationstemperatur betreiben zu können. Der Kühlmittelkreislauf wird durch die Pumpe 35 aufrechterhalten. Der Kühler 34 wirkt ebenfalls als eine Trenneinrichtung, wobei die sich in dem Kühler 34 verflüssigenden Bestandteile des Abgases ebenfalls in den Schwerkraftabscheider 36 geleitet werden, während die gasförmigen Bestandteile verschiedene Aktivkohlefilter und Kühleinrichtungen durchlaufen können. Von den Aktivkohlefiltern 47, 50 wird schließlich das gereinigte Abgas, das im wesentlichen nur noch aus der vorher eingesaugten Leckluft besteht, über die Abluftleitung 42 ausgetragen, wobei, wie bereits erwähnt, diese Abluft dann der zweistufigen Strippkolonne 39 zugeführt werden kann.

Im Regenerationsbetrieb der Aktivkohlefilter 47, 50 wird diesen über die Leitung 14 Heißdampf zugeführt, welcher die in dem Aktivkohlefilter aufgenommenen Verunreinigungen herauslöst. Der Dampf wird dann durch die anschließenden Kühler 49 geleitet und das sich dabei verflüssigende Material wird, wie auch im Falle der übrigen flüssigen Fraktionen, dem Schwerkraftabscheider 36 zugeführt. Es versteht sich, daß bei dieser Betriebsart die Ventile 48 geschlossen sind.

Auf diese Weise wird aus dem verunreinigten Boden, der ursprünglich in den Evaporator 10 eingebracht wurde, gereinigter Boden 8, wobei die flüchtigen organischen und anorganischen Lösungsmittel und Verbindungen am Ausgang des Schwerkraftabscheiders 36 zumindest zu einem erheblichen Teil wiedergewonnen werden und je nach Art der Verunreinigungen unmittelbar wiederverwendet, weiterverarbeitet, oder gegebenenfalls auch entsorgt bzw. deponiert werden können, während weiterhin noch ein Teil der Abluft bei der Leitung 42 austreten kann und auch der Schlamm aus dem Sedimentabscheider 32 wahlweise der Eintragsvorrichtung 13 des Evaporators 10 wieder zugeführt, oder aber über die Leitung 52 zum Zwecke der endgültigen Deponierung ausgegeben werden kann.

Das erfindungsgemäße Verfahren hat den Vorteil, daß es umfassend und vollständig Verunreinigungen, deren Siedepunkt unter einem vorgebbaren Grenzwert liegt, aus verunreinigten Böden entfernen kann, wofür verhältnismäßig wenig Energie und Kosten aufgewendet werden müssen. Das Verfahren hat weiterhin den Vorteil, daß es rein physikalisch arbeitet, d.h. es finden im wesentlichen keinerlei chemische Umsetzungen, wie Verbrennungen oder dergleichen statt. Die Verunreinigungen können teilweise und je nach Art der Verschmutzung des Bodens in mehr oder weniger reiner Form wiedergewonnen werden. Die verbleibenden deponierfähigen Reststoffe, die nicht anderweitig verwendet werden können, fallen nur in sehr geringem Umfang an, so daß auch aus diesem Grunde, vor allem aber wegen des geringen spezifischen Energiebedarfes die erfindungsgemäße Anlage und das entsprechende Verfahren sehr kostengünstig arbeiten.

## Patentansprüche

1. Vorrichtung zur Reinigung von verunreinigtem Bodenmaterial, mit einer Vorzerkleinerungseinrichtung (4, 5, 6) und einer Wärmebehandlungsstation, in Form eines Evaporators (10), an welchem Heizeinrichtungen (21, 11), Umwälz und Transporteinrichtungen (11) sowie im Abstand von einem Materialeinlauf in den Evaporator (10) eine Dampfzufuhreinrichtung (12) für die Zufuhr von über die Wasserkondensationstemperatur erhitztem Wasserdampf zu dem in diesem Bereich ebenfalls über die Kondensationstemperatur erhitzten Bodenmaterial vorgesehen sind, und mit mindestens einer hohlen, mit Umwälz- und Transportschaufeln versehenen Welle (11), die sich in Längsrichtung eines länglichen Evaporatorbehälters erstreckt, dadurch gekennzeichnet, daß zwei oder mehr hohle, mit Umwälz- und Transporschaufeln versehene Wellen vorgesehen sind und daß die Dampfzufuhreinrichtung (12), in Fließrichtung des durch den Evaporator (10) fließenden Bodenmaterials, im letzten Drittel des Evaporators (10) vorgesehen ist.

2. Vorrichtung nach Anspruch 1, dadurch gekennzeichnet, daß die Heizeinrichtungen (21, 11) von einem fließfähigen Wärmeträger durchströmte Hohlelemente aufweisen, die mit ihren dem Wärmeträger abgewandten Außenflächen mit dem Bodenmaterial in Kontakt treten.

3. Vorrichtung nach einem der Ansprüche 1 oder 2, dadurch gekennzeichnet, daß dem Bodenmaterialsausgang des Evaporators (10) ein Trockenkühler (18) nachgeschaltet ist.

4. Vorrichtung nach einem der Ansprüche 1 bis 3, dadurch gekennzeichnet, daß dem Abgasaustritt des Evaporators eine Abgastrenneinrichtung (30, 31, 32, 47) nachgeschaltet ist.

5. Vorrichtung nach Anspruch 4, dadurch gekennzeichnet, daß zwischen dem Evaporator (10) und der Abgastrenneinrichtung (30, 31, 32, 47) ein Staubabscheider (27) vorgesehen ist.

6. Vorrichtung nach Anspruch 5, dadurch gekennzeichnet, daß hinter dem Staubabscheider (27) und vor der Abgastrenneinrichtung (30, 31, 32, 47) eine wahlweise zuschaltbare Überhitzungsvorrichtung (28) vorgesehen ist.

7. Vorrichtung nach einem der Ansprüche 4 bis 6, dadurch gekennzeichnet, daß die Abgastrenneinrichtung einen Sediment- und/oder Schwerkraftabscheider (32, 36) oder eine sonstige Phasentrenneinrichtung für feste und flüssige Fraktionen aufweist.

8. Vorrichtung nach Anspruch 7, dadurch gekennzeichnet, daß eine Sedimentschlammrückführleitung (9) zum Eingang des Evaporators (10) vorgesehen ist.

9. Vorrichtung nach einem der Ansprüche 1 bis 8, dadurch gekennzeichnet, daß die Abgastrenneinrichtung mindestens einen Kondensator aufweist und daß hinter der Sedimentschlammausleitung aus den Kondensatoren (30 und/oder 31) eine Neutralisationsmittelzugabe (29) vorgesehen ist.

10. Vorrichtung nach Anspruch 4 und einem der Ansprüche 5 bis 9, soweit sie auf Anspruch 4 rückbezogen sind, dadurch gekennzeichnet, daß die Abgastrenneinrichtung mindestens einen Kondensator aufweist und daß eine vom Trockenkühler (18) zu dem Kondensator (30) führende Leitung (43) vorgesehen ist.

11. Verfahren zum Reinigen von mit flüchtigen Stoffen verunreinigtem Bodenmaterial, welches in einem ersten Schritt zerkleinert und in einem zweiten Schritt wärmebehandelt wird, wobei das Bodenmaterial in dem zweiten Schritt ohne Kontakt mit einer offenen Flamme über Wärmetauscher auf eine Temperatur oberhalb der Siedetemperatur von Wasser und unterhalb einer Temperatur von 400°C erhitzt wird und daß anschließend das erhitzte Bodenmaterial heißem, gegebenenfalls überhitztem Wasserdampf ausgesetzt wird, welcher die flüchtigen Bestandteile von dem Bodenkorn löst dadurch gekennzeichnet, daß das Bodenmaterial dem Wasserdampf erst ausgesetzt wird, nachdem das Bodenmaterial aufgrund der Wärmeeinwirkung und des gleichzeitigen Umwälzens sehr feinkörnig geworden ist, wobei die Erhitzungstemperatur des Bodenmaterials in dem vorgesehenen Temperaturbereich einstellbar und regelbar ist.

12. Verfahren nach Anspruch 11, dadurch gekennzeichnet, daß das Bodenmaterial auf eine Temperatur unter 300°C, vorzugsweise im Bereich zwischen 110°C und 250°C, erhitzt wird.

13. Verfahren nach einem der Ansprüche 11 oder 12, dadurch gekennzeichnet, daß das Erhitzen des Bodenmaterials und die anschließende Dampfbefeuchtung in demselben, im wesentlichen abgeschlossenen Behälter (10) und vorzugsweise unter geringem Unterdruck in einem Bereich von ca. 10 bis 50 mbar unter Umgebungsdruck erfolgt.

14. Verfahren nach einem der Ansprüche 11 bis 13, dadurch gekennzeichnet, daß das Bodenmaterial nach der Dampfbehandlung aus dem Evaporator (10) ausgetragen, dann trocken gekühlt und anschließend angefeuchtet wird.

15. Verfahren nach einem der Ansprüche 11 bis 14, dadurch gekennzeichnet, daß das bei der Dampfbehandlung anfallende Abgas mindestens einem Kondensationsschritt ausgesetzt wird.

16. Verfahren nach Anspruch 15, dadurch gekennzeichnet, daß zusätzlich zu dem Behandlungsdampf weiterer erhitzter Wasserdampf als Trägergas für aus dem Boden ausgetriebene Stoffe dem Evaporator (10) zugeführt wird.

17. Verfahren nach Anspruch 15 oder 16, dadurch gekennzeichnet, daß das aus dem Evaporator (10) austretende Abgas in einen Sprühkondensator geleitet wird, der vorzugsweise knapp unterhalb des Taupunktes von Wasser betrieben wird.

18. Verfahren nach Anspruch 17, dadurch gekennzeichnet, daß die Arbeitstemperatur des Sprühkondensators (30) vorzugsweise durch elektronische Regelung des Wasserumlaufes im Kondensator im Bereich zwischen 90 und 98°C, vorzugsweise zwischen 95 und 96°C gehalten wird.

19. Verfahren nach einem der Ansprüche 15 bis 18, dadurch gekennzeichnet, daß nach dem ersten Kondensationsschritt ein zweiter Kondensationsschritt in einem Kondensator erfolgt, welcher bei einer Temperatur unterhalb von 60°C, vorzugsweise bei einer Temperatur ≤ 40°C betrieben wird.

20. Verfahren nach einem der Ansprüche 15 bis 19, dadurch gekennzeichnet, daß die im Sprühkondensator und/oder einem nachfolgenden Kondensator anfallende Flüssigkeit einer Sedimentation und/oder Schwerkraftabscheidung ausgesetzt wird, wobei die nach der Phasentrennung, wie z. B. der Sedimentation und/oder Schwerkraftabscheidung frei werdenden organischen Phasen einer Weiterverarbeitung zugeführt werden.

21. Verfahren nach Anspruch 15 oder einem der darauf rückbezogenen Ansprüche 16 bis 20, dadurch gekennzeichnet daß das Abgas des Evaporators vor der Kondensierung bis auf maximal 550 bis 600 °C überhitzt wird.

22. Verfahren nach Anspruch 15 oder einem der darauf rückbezogenen Ansprüche 16 bis 20, dadurch gekennzeichnet daß das Abgas nach dem Austritt aus dem Evaporator und vor der Kondensierung durch einen Staubabscheider (27) geleitet wird.

23. Verfahren nach Anspruch 15 oder einem der darauf rückbezogenen Ansprüche 16 bis 20, dadurch gekennzeichnet daß für die flüssigen und oder schlammigen Abscheidungen hinter dem Kondensator (30) die Zugabe eines Neutralisationsmittels vorgesehen ist.

## Claims

1. Device for cleansing polluted soil with initial comminution means (4, 5, 6) and a heat-treatment station in the form of an evaporator (10), which is provided with heating means (21, 11), circulating and transporting means (11) and, at a distance from a material intake in the evaporator (10) a steam supply means (12) for supplying steam heated above the condensation temperature of water to the soil which is also heated in this area to above condensation temperature, and with at least one hollow shaft (11) provided with circulating and transport scoops which extends in the longitudinal direction of an elongate evaporator container, characterised in that two or more hollow shafts with circulating and transport scoops are provided, and that the steam supply means (12) is provided in the final third of the evaporator (10) in the direction of flow of the soil flowing through the evaporator (10).

2. Device according to claim 1, characterised in that the heating means (21, 11) are provided with hollow elements which can be flowed through by a flowable heat carrier, the outside surfaces of which, facing away from the heat carrier, come into contact with the soil.

3. Device according to one of claims 1 or 2, characterised in that a dry cooler (18) is connected following on from the soil outlet of the evaporator (10).

4. Device according to one of claims 1 to 3, characterised in that a waste gas separating means (30, 31, 32, 47) is connected following on from the waste gas outlet of the evaporator.

5. Device according to claim 4, characterised in that a dust precipitator (27) is provided between the evaporator (10) and the waste gas separator (30, 31, 32, 47).

6. Device according to claim 5, characterised in that a superheating device (28) which can be switched on selectively is provided following the dust precipitator (27) and in front of the waste gas separating means (30, 31, 32, 47).

7. Device according to one of claims 4 to 6, characterised in that the waste gas separating means is provided with a sediment and/or gravity precipitator (32, 36), or any type of phase separating means for solid and liquid fractions.

8. Device according to claim 7, characterised in that a sediment slurry recovery pipe is provided at the inlet of the evaporator (10).

9. Device according to one of claims 1 to 8, characterised in that the waste gas separating means is provided with at least one condenser and that there is an addition of a neutralising agent following the sediment slurry conduit (29) from the condensers (30 and/or 31).

10. Device according to claim 4 and one of claims 5 to 9, when dependent on claim 4, characterised in that the waste gas separating means is provided with at least one condenser, and that a pipe leading from the drying cooler (18) to the condenser (30) is provided.

11. Process for cleansing soil polluted with volatile substances which is comminuted in a first step and heat-treated in a second step, wherein the soil is heated in a second step without contact with an open flame by means of heat exchangers to a temperature above the boiling temperature of water and below a temperature of 400°C and that the heated soil is subsequently exposed to hot, possibly superheated steam, which releases the volatile components from the soil particles, characterised in that the soil is only exposed to the steam after the soil has been come very finely particulate due to the effect of heating and at the same time of circulation, wherein the heating temperature of the soil can be set and controlled within the pre-determined range.

12. Process according to claim 11, characterised in that the soil is heated to a temperature of below 300°C, preferably within the range of between 110° and 250°C.

13. Process according to one of claims 11 or 12, characterised in that the heating of the soil and the subsequent humidifying with steam is done in the same, substantially sealed container (10) and preferably at a slightly low pressure within a range of approximately 10 to 50 mbar below atmospheric pressure.

14. Process according to one of claims 11 to 13, characterised in that the soil is removed from the evaporator (10) after the steam treatment, then dry cooled and subsequently humidified.

15. Process according to one of claims 11 to 14, characterised in that waste gas occurring during the steam treatment is subjected to at least one condensation step.

16. Process according to claim 15, characterised in that in addition to the steam for treatment, additional heated steam is supplied to the evaporator (10) as carrier gas for substances given off from the soil.

17. Process according to claim 15 or 16, characterised in that the waste gas leaving the evaporator (10) is lead into a spray condenser, which is preferably operated slightly below the dew point of water.

18. Process according to claim 17, characterised in that the working temperature of the spray condenser (30) is kept, preferably by means of electronic control of the water circulation in the condenser, in the range of between 90 and 98°C, preferably between 95 and 96°C.

19. Process according to one of claims 15 to 18, characterised in that after the first condensation step, a second condensation step takes place in a condenser which is operated at a temperature below 60°C, preferably at a temperature ≤40°C.

20. Process according to one of claims 15 to 19, characterised in that the liquid arising in the spray condenser and/or a subsequent condenser is subjected to sedimentation and/or gravity separation, wherein the organic phases released after the phase separation, such as the sedimentation and/or gravity separation, are supplied to a recycling procedure.

21. Process according to claim 15 or one of claims 16 to 20 dependent thereon, characterised in that the waste gas from the evaporator is superheated to a maximum of 550 to 600°C before condensation.

22. Process according to claim 15 or one of claims 16 to 20 dependent thereon, characterised in that the waste gas is lead through a dust precipitator (27) after leaving the evaporator and before condensation.

23. Process according to claim 15 or one of claims 16 to 20 dependent thereon, characterised in that addition of a neutralising agent is provided for the liquid or slurry-like deposits behind the condenser (30).

## Revendications

1. Dispositif de dépollution d'un mat**é**riau formé de terres polluées, comprenant un dispositif de fragmentation préliminaire (4, 5, 6) et un poste de traitement thermique sous la forme d'un évaporateur (10), sur lequel sont prévus des dispositifs de chauffage (21, 11), des dispositifs de mise en circulation et de transport (11), ainsi qu'à distance d'une entrée du matériau dans l'évaporateur (10), un dispositif d'alimentation en vapeur (12) destiné à amener de la vapeur d'eau, chauffée au-delà de la température de condensation de l'eau, au mat**é**riau formé de terres également chauffé dans cette zone au-delà de la temperature de condensation, et comprenant au moins un arbre creux (11) comportant des aubes de mise en circulation et de transport et s'étendant dans la direction longitudinale d'un réservoir d'évaporateur allongé, caractérisé en ce que sont prévus deux arbres creux ou plus, comportant des aubes de mise en circulation et de transport, et en ce que le dispositif d'alimentation en vapeur (12) est prévu dans le dernier tiers de l'évaporateur (10) en se référant à la direction d'écoulement du matériau formé de terres s'écoulant à travers l'évaporateur (10).

2. Dispositif selon la revendication 1, caractérisé en ce que les dispositifs de chauffage (21, 11) présentent des éléments creux à travers lesquels s'écoule un agent caloporteur fluide, et qui entrent en contact avec le matériau formé de terres, par leurs surfaces extérieures tournées à l'opposé de l'agent caloporteur.

3. Dispositif selon l'une des revendications 1 ou 2, caractérisé en ce qu'en aval de la sortie des terres de l'évaporateur (10), est monté un refroidisseur à sec (18).

4. Dispositif selon l'une des revendications 1 à 3, caractérisé en ce qu'en aval de la sortie des gaz d'échappement de l'évaporateur, est monté un dispositif de séparation des gaz d'échappement (30, 31, 32, 47).

5. Dispositif selon la revendication 4, caractérisé en ce qu'un séparateur de poussières (27) est prévu entre l'évaporateur (10) et le dispositif de séparation des gaz d'échappement (30, 31, 32, 47).

6. Dispositif selon la revendication 5, caractérisé en ce qu'en aval du séparateur de poussières (27) et en amont du dispositif de séparation des gaz d'échappement (30, 31, 32, 47), est prévu un dispositif de surchauffe (28) pouvant être mis en marche sélectivement.

7. Dispositif selon l'une des revendications 4 à 6, caractérisé en ce que le dispositif de séparation des gaz d'échappement comprend un séparateur à sédimentation et/ou par gravité (32, 36), ou bien un autre dispositif de séparation de phases pour des fractions solides et liquides.

8. Dispositif selon la revendication 7, caractérisé en ce qu'il est prévu une conduite (9) de renvoi des boues de sédimentation à l'entrée de l'évaporateur (10).

9. Dispositif selon l'une des revendications 1 à 8, caractérisé en ce que le dispositif de séparation des gaz d'échappement comprend au moins un condenseur, et en ce qu'en aval de la conduite de sortie des boues de sédimentation hors des condenseurs (30 et/ou 31), est prévue une addition d'agent de neutralisation (29).

10. Dispositif selon la revendication 4 et l'une des revendications 5 à 9, dans la mesure où elles se rattachent à la revendication 4, caractérisé en ce que le dispositif de séparation des gaz d'échappement comprend au moins un condenseur, et en ce qu'il est prévu une conduite (43) conduisant du refroidisseur à sec (18) au condenseur (30).

11. Procédé de dépollution d'un matériau formé de terres polluées par des substances volatiles, qui, dans une première étape, est fragmenté et, dans une seconde étape, est soumis à un traitement thermique, le matériau formé de terres étant chauffé durant la seconde étape, sans contact avec une flamme ouverte, par l'intermédiaire d'échangeurs de chaleur, à une température supérieure à la température d'ébullition de l'eau et inférieure à une température de 400°C, le matériau formé de terres, chauffé, étant ensuite exposé à de la vapeur d'eau chaude, le cas échéant surchauffée, qui extrait les composants volatils des grains de terre, caractérisé en ce que le matériau formé de terres n'est exposé à la vapeur d'eau qu'après avoir pris une structure à grains très fins sous l'effet de l'action de la chaleur et de la mise en circulation simultanée, la température de chauffage du matériau formé de terres pouvant alors être réglée et régulée dans la plage de températures prévue.

12. Procédé selon la revendication 11, caractérisé en ce que le matériau formé de terres est chauffé à une température inférieure à 300°C, de préférence dans une plage entre 110°C et 250°C.

13. Procédé selon l'une des revendications 11 ou 12, caractérisé en ce que le chauffage du matériau formé de terres et l'humidification à la vapeur qui lui succède, sont effectués dans le même réservoir (10), essentiellement fermé, et de préférence sous une légère dépression, dans une plage d'environ 10 à 50 mbar au-dessous de la pression ambiante.

14. Procédé selon l'une des revendications 11 à 13, caractérisé en ce que le matériau formé de terres est extrait de l'évaporateur (10) après le traitement à la vapeur, puis est refroidi à sec et est ensuite humidifié.

15. Procédé selon l'une des revendications 11 à 14, caractérisé en ce que les gaz d'échappement produits lors du traitement à la vapeur sont soumis à au moins une étape de condensation.

16. Procédé selon la revendication 15, caractérisé en ce qu'en plus de la vapeur de traitement, on amène à l'évaporateur (10), de la vapeur d'eau chauffée supplémentaire, en guise de gaz porteur pour des substances expulsées des terres.

17. Procédé selon la revendication 15 ou 16, caractérisé en ce que les gaz d'échappement sortant de l'évaporateur (10) sont dirigés dans un condenseur à aspersion, que l'on fait fonctionner de préférence juste au-dessous du point de rosée de l'eau.

18. Procédé selon la revendication 17, caractérisé en ce que la température de fonctionnement du condenseur à aspersion (30) est maintenue, de préférence par une régulation électronique de la circulation d'eau dans le condenseur, dans une plage entre 90 et 98°C, de préférence entre 95 et 96°C.

19. Procédé selon l'une des revendications 15 à 18, caractérisé en ce qu'après la première étape de condensation, est effectuée une seconde étape de condensation dans un condenseur que l'on fait fonctionner à une température inférieure à 60°C, de préférence à une température ≤ 40°C.

20. Procédé selon l'une des revendications 15 à 19, caractérisé en ce que le liquide produit dans le condenseur à aspersion et/ou un condenseur placé en aval, est soumis à une sédimentation et/ou à une séparation par gravité, les phases organiques libérées après la séparation des phases, telle que par exemple la sédimentation et/ou la séparation par gravité, étant amenées à un traitement ultérieur.

21. Procédé selon la revendication 15 ou l'une des revendications 16 à 20 qui s'y rattachent, caractérisé en ce que les gaz d'échappement de l'évaporateur sont surchauffés avant la condensation, jusqu'à 550 à 600°C au maximum.

22. Procédé selon la revendication 15 ou l'une des revendications 16 à 20 qui s'y rattachent, caractérisé en ce que les gaz d'échappement, après leur sortie de l'évaporateur et avant la condensation, sont dirigés à travers un séparateur de poussières (27).

23. Procédé selon la revendication 15 ou l'une des revendications 16 à 20 qui s'y rattachent, caractérisé en ce que pour les éléments séparés liquides et/ou sous forme de boues, il est prévu en aval du condenseur (30), l'addition d'un agent de neutralisation.
